# EUROPÄISCHE PATENTSCHRIFT

(11) **EP 3 781 292 B1**
(45) Veröffentlichungstag und Bekanntmachung des Hinweises auf die Patenterteilung: **11.08.2021**
(21) Anmeldenummer: 19731999.9
(22) Anmeldetag: 18.06.2019
(51) Int. Cl.: B01D 53/06, B01D 53/73, B01D 53/56

(54) **VERWERTUNG VON STICKOXIDEN AUS DER UMGEBUNGSLUFT**
UTILIZATION OF NITROGEN OXIDES FROM AMBIENT AIR
UTILISATION D'OXYDES D'AZOTE PRÉSENTS DANS L'AIR AMBIANT

(30) Priorität: 17.07.2018 DE 102018211819
(43) Veröffentlichungstag der Anmeldung: 24.02.2021
(73) Patentinhaber: Audi AG, 85045 Ingolstadt (DE)
(72) Erfinder: MÜLLER-HELLWIG, Simone, 85051 Ingolstadt (DE); SEIFERT, Hagen, 93049 Regensburg (DE); KRAJETE, Alexander, 4061 Pasching (AT)
(86) Internationale Anmeldenummer: PCT/EP2019/066051
(87) Internationale Veröffentlichungsnummer: WO 2020/015946

(56) Entgegenhaltungen:
- GB-A- 2 124 103
- US-A- 5 057 128
- US-A- 5 158 582

## Beschreibung

Die Erfindung betrifft die Verwertung von in der Umgebungsluft enthaltenen Stickoxiden. Es werden ein System und ein Verfahren vorgestellt, mit denen die Stickoxide zur Herstellung von flüssigen oder festen Chemikalien genutzt werden können.

Stickoxide in der Atmosphäre entstehen durch natürliche Phänomene, wie Blitze, hauptsächlich aber bei der Verbrennung fossiler Brennstoffe, wie Kohle oder Öl. In Ballungsräumen wird ein Großteil der Stickoxidemissionen durch den Verkehr verursacht. Immer mehr Städte haben das Problem, dass lokal zu hohe Emissionswerte gemessen werden. Die Städte sind gegenüber ihren Bürgern in der Pflicht, für saubere Luft zu sorgen. Eine Maßnahme zur Verringerung von Stickoxidemissionen ist der Einbau von Katalysatoren, die Stickoxide reduzieren, in die Abgassysteme von Fahrzeugen.

Die EP 2 476 473 A1 betrifft ein Filtermodul zur Adsorption von in der Umgebungsluft befindlichen Partikeln und/oder zur Umsetzung von gasförmigen Luftschadstoffen, die z.B. beim Betrieb von Kraftfahrzeugen auf Straßen oder Schienen oder bei anderen Verbrennungsvorgängen entstehen. Das Filtermodul filtert Schadstoffe, wie Feinstaub, Stickoxide oder leichtflüchtige Kohlenwasserstoffe, aus der Umgebungsluft und wandelt diese katalytisch in weniger schädliche Verbindungen um. Das verwendete Filtermaterial ist auswechselbar.

Aus der DE 20 2015 100 308 U1 ist eine aus Modulen aufgebaute Filteranordnung zum Entfernen von festen und/oder flüssigen, in einem gasförmigen Medium enthaltenen Teilchen bekannt. Das Modul umfasst ein Gehäuse, in dem eine motorgetriebene Anordnung zum Erzeugen eines Stroms des gasförmigen Mediums und eine Filteranordnung angeordnet sind. Die Filteranordnung umfasst ein Filter der Klasse G4 nach DIN EN 779 als Vorfilter und ein Filter der Klasse F7 als Hauptfilter.

Bei den beschriebenen Verfahren entsteht entweder Abfall in Form von verbrauchtem Filtermaterial oder es werden bei der Regeneration des Filtermaterials die adsorbierten Schadstoffe wieder freigesetzt bzw. unter Bildung anderer gasförmiger Schadstoffe umgesetzt.

Aus der US 5 158 582 ist ein Verfahren sowie eine Anlage zur Adsorption von NOx aus Luft mittels Zeolith bekannt, sowie das Bewegen des Adsorbens zu einer Desorptionseinheit wo mittels erhöhter Temperatur das adsorbierte NOx desorbiert wird, und nachfolgende Abscheidung des desorbierten NOx in wässriger Alkalilösung in der Form von Nitrat und Nitrit, mit dem Hinweis auf eine Weiterbehandlung dieser Lösung.

Auch aus der GB 2 124 103 ist ein Verfahren und eine Anlage zur adsorptiven Entfernung von NOx aus einem Luftstrom bekannt, sowie die Verwendung des desorbierten NOx zur Erzeugung von Salpetersäure.

Aus der US 5 057 128 ist im Stand der Technik grundsätzlich bekannt, dass Adsorptionsmodule austauschbar und entfernbar sind.

Vor diesem Hintergrund hat sich die Erfindung die Aufgabe gestellt, ein Verfahren und ein System zur Verringerung der Konzentration von Stickoxiden in der Umgebungsluft und zur Nutzung der aus der Umgebungsluft entfernten Stickoxide zur Verfügung zu stellen, welche einen effizienteren Verwertungsprozess ermöglicht.

Die Aufgabe wird erfindungsgemäß gelöst durch ein Verfahren mit den Merkmalen des Anspruchs 1 und ein System mit den Merkmalen des Anspruchs 5. Ausgestaltungen und Weiterbildungen der Erfindung ergeben sich aus den abhängigen Ansprüchen.

Ein Merkmal der Erfindung ist es, dass Stickoxide (NOₓ), die durch Adsorption auf einem Adsorbermaterial eines NOₓ-Speichers der Umgebungsluft entnommen wurden und sich in dem NOₓ-Speicher angereichert haben, nach Entnahme des beladenen NOₓ-Speichers aus diesem desorbiert und einem Umwandlungsprozess zugeführt werden. Dieser Umwandlungsprozess nutzt von dem Adsorbermaterial desorbierte Stickoxide zur Herstellung von flüssigen oder festen stickstoffhaltigen Verbindungen, beispielsweise Düngemitteln. Das Adsorbermaterial kann nach der Desorption der Stickoxide (Regeneration des Adsorbermaterials) wieder zur Adsorption von Stickoxiden eingesetzt werden.

Gegenstand der Erfindung ist ein Verfahren zur Verwertung von in der Umgebungsluft enthaltenen Stickoxiden. Das erfindungsgemäße Verfahren umfasst als ersten Schritt die Adsorption von Stickoxiden (NOₓ) aus der Umgebungsluft in einer stationären Adsorbereinheit. Hierzu wird ein Strom von Umgebungsluft durch eine stationäre Adsorbereinheit geleitet. In der Adsorbereinheit werden im Luftstrom enthaltene Stickoxide (NOₓ) adsorbiert. Die Adsorbereinheit wird dadurch mit NOₓ beaufschlagt. In einer Ausführungsform des Verfahrens wird dieser Schritt solange durchgeführt, bis die Kapazitätsgrenze der Stickoxid-Aufnahme der Adsorbereinheit erreicht ist. Die aus der Adsorbereinheit herausströmende Luft ist an Stickoxiden abgereichert.

In einer Ausführungsform enthält die Adsorbereinheit ein Adsorbermaterial, das Stickoxide binden kann, und die Stickoxide (NOₓ) werden von dem in der Adsorbereinheit angeordneten Adsorbermaterial adsorbiert.

In einer Ausführungsform umfasst das Adsorbermaterial mindestens ein anorganisches Material aus der Klasse der Aluminiumoxide oder Alumosilikate. In einer Ausführungsform umfasst das Adsorbermaterial mindestens einen Zeolithen. Zeolithe, die Stickoxide adsorbieren können, sind dem Fachmann im Prinzip bekannt. Beispiele umfassen ZSM-5, Zeolith Y und Mordenit.

In einer anderen Ausführungsform umfasst das Adsorbermaterial Alkalioxide oder Erdalkalioxide oder Alkalicarbonate oder Erdalkalicarbonate. In einer speziellen Ausführungsform umfasst das Adsorbermaterial Bariumoxid, gegebenenfalls in Kombination mit Platin und Rhodium.

In einer Ausführungsform wird das Adsorbermaterial in granularer Form eingesetzt. In einer weiteren Ausführungsform besteht das Adsorbermaterial aus Partikeln mit einer Korngröße, d. h. einem Äquivalentdurchmesser, im Bereich von 1 bis 5 mm. In einer Ausführungsform liegt das Adsorbermaterial in einem Filtermodul der Adsorbereinheit als Schüttung vor. In einer weiteren Ausführungsform ist ein für den Luftstrom durchlässiger Behälter in einem Filtermodul der Adsorbereinheit mit dem Adsorbermaterial gefüllt.

Nach Beendigung des ersten Schritts des erfindungsgemäßen Verfahrens, insbesondere nach Erreichen der Kapazitätsgrenze der Adsorbereinheit, wird der Luftstrom durch die mit Stickoxiden (NOₓ) beladene Adsorbereinheit unterbrochen und das bzw. die Filtermodul(e) der Adsorbereinheit oder das darin befindliche Adsorbermaterial werden entfernt. Das mit NOx beladene Material wird in einer Sammelstelle gesammelt und zwischengelagert, um größere Mengen des beladenen Materials für den nächsten Schritt zur Verfügung zu haben und dadurch den Verwertungsprozess effizienter zu gestalten. Die in der Adsorbereinheit gebundenen adsorbierten Stickoxide (NOₓ) werden anschließend desorbiert und einer Umsetzung der Stickoxide (NOₓ) zu flüssigen oder festen stickstoffhaltigen Verbindungen zugeführt.

In einer Ausführungsform des Verfahrens werden mit Stickoxiden (NOₓ) beladene Filtermodule der Adsorbereinheit gegen unbeladene Filtermodule ausgetauscht. In einer anderen Ausführungsform wird ein mit Stickoxiden (NOₓ) beladenes Adsorbermaterial in der Adsorbereinheit gegen ein unbeladenes Adsorbermaterial ausgetauscht. In einer weiteren Ausführungsform wird das mit NOₓ beladene Adsorbermaterial in einer Sammelstelle gesammelt und zwischengelagert, bevor die Stickoxide aus dem Adsorbermaterial desorbiert werden.

In einer Ausführungsform erfolgt die Desorption der Stickoxide aus der Adsorbereinheit durch Erhitzen von Filtermodulen der Adsorbereinheit und/oder Verringerung des Drucks, oder durch Durchleitung von heißem Wasserdampf, heißem Gas oder einem flüssigen Lösungsmittel, z.B. Wasser. Dadurch wird das adsorbierte NOₓ in die Dampf- oder Flüssigphase überführt und das Filtermodul wird regeneriert.

In einer Ausführungsform erfolgt die Desorption der Stickoxide aus einem mit NOₓ beladenen Adsorbermaterial, das der Adsorptionseinheit entnommen wurde, durch Behandlung des Adsorbermaterials mit Hitze, Unterdruck, heißem Dampf, heißem Gas oder einem flüssigen Lösungsmittel (z.B. Wasser). Das NOₓ geht in die Dampf- oder Flüssigphase über, das Adsorbermaterial bleibt unverändert. Eventuell muss das Adsorbermaterial getrocknet werden, bevor es erneut zur Stickoxidentfernung aus Umgebungsluft eingesetzt werden kann. Bevorzugt beträgt die Temperatur sowohl bei der Desorption als auch bei der Trocknung maximal 200°C.

Das aus der Adsorbereinheit abgetrennte NOₓ wird einer weiteren Umsetzung zugeführt. Dabei reagieren die Stickoxide (NOₓ) zu flüssigen oder festen stickstoffhaltigen Verbindungen. Beispielsweise kann das NOₓ in die Produktionskette von Salpetersäure, Nitraten oder nichtwässrigen Lösungsmitteln auf NO₂-Basis eingebracht werden. In einer Ausführungsform umfassen die flüssigen oder festen stickstoffhaltigen Verbindungen Nitrate.

Das erfindungsgemäße Verfahren bietet eine Reihe von Vorteilen, insbesondere kann es einen Beitrag zur Verringerung von Umweltbelastung und Energieverbrauch leisten. Betrachtet man den Gesamtprozess, so wird Luftstickstoff zu NOₓ oxidiert, welches in einer Adsorbereinheit zwischengespeichert wird und nach Desorption zu flüssigen oder festen stickstoffhaltigen Verbindungen umgesetzt wird.

Die Stickoxide werden so der Atmosphäre bzw. der Umgebungsluft der Adsorbereinheit entzogen. Durch den Einsatz des erfindungsgemäßen Verfahrens lassen sich der Umgebungsluft in belasteten Zonen, z.B. an stark befahrenen Straßen oder in Tunneln, signifikante Mengen an Stickoxiden entziehen. In Tunneln lässt sich der Stickoxidgehalt der Luft signifikant reduzieren.

Das entstandene Reaktionsprodukt kann einer weiteren Verwendung zugeführt werden, beispielsweise als Dünger. Gleichzeitig wird NO₂, welches zur Herstellung des Produktes sonst hergestellt werden müsste, substituiert. Durch die Substitution von NO₂ in der Umsetzungsreaktion wird Energie eingespart.

Die in der Umgebungsluft enthaltenen Stickoxide, die z.B. aus den Abgasen von Verbrennungsmotoren stammen, werden durch das erfindungsgemäße Verfahren industriell nutzbar gemacht, da sie nach der Desorption in konzentrierter Form zur Verfügung stehen und nicht mehr durch die anderen Luftbestandteile verdünnt sind. Da in diversen industriellen Verfahren große Mengen an Stickoxiden verbraucht werden, lassen sich enorme Mengen der aus der Umgebungsluft gewonnenen Stickoxide weiterverarbeiten, d. h. der Stickstoff-Kreislauf kann quasi beliebig groß gestaltet werden.

Gegenstand der Erfindung ist auch ein System zur Verwertung von Stickoxiden aus der Umgebungsluft. Das System umfasst eine stationäre Adsorbereinheit, die zur Adsorption von Stickoxiden aus der Umgebungsluft eingerichtet ist, ein Desorptionsmodul, das dazu eingerichtet ist, in der Adsorbereinheit adsorbierte Stickoxide aus dieser zu desorbieren, und eine Reaktionseinheit, die dazu eingerichtet ist, die desorbierten Stickoxide zu flüssigen oder festen stickstoffhaltigen Verbindungen umzusetzen. Das System ist insbesondere zur Durchführung des erfindungsgemäßen Verfahrens geeignet.

Das System umfasst eine Adsorbereinheit, die zur Adsorption von Stickoxiden (NOₓ) aus der Umgebungsluft eingerichtet ist. In einer Ausführungsform umfasst die Adsorbereinheit ein Gehäuse mit wenigstens einer Ein- und Ausströmöffnung in der Gehäusewandung, ein Filtermodul im Inneren des Gehäuses, welches strömungstechnisch mit der Ein- und Austrittsöffnung verbunden ist, so dass ein Luftkanal gebildet ist, und eine Luftansaug-Vorrichtung, um Luft aus der Umgebung anzusaugen und durch das Filtermodul zu führen. In einer Ausführungsform ist die Luftansaug-Vorrichtung ein Gebläse.

In einer speziellen Ausführungsform ist im Luftkanal der Adsorbereinheit eine Trocknungsvorrichtung bzw. Entfeuchtungsvorrichtung vorgesehen, die Wasser aus dem Luftstrom entfernt, bevor er in das Filtermodul eintritt. Diese Variante kommt insbesondere dann zum Einsatz, wenn im Filtermodul hydrophile Adsorbermaterialien verwendet werden. Durch die Trocknung des Luftstroms wird verhindert, dass die Adsorptionskapazität des Adsorbermaterials für Stickoxide durch Wasserbeladung geschmälert wird.

In einer Ausführungsform enthält die Adsorbereinheit ein Adsorbermaterial, welches dazu eingerichtet ist, Stickoxide (NOₓ) adsorptiv zu binden. In einer speziellen Ausführungsform umfasst das Adsorbermaterial mindestens einen Zeolithen, beispielsweise ZSM-5, Zeolith Y oder Mordenit. In einer anderen Ausführungsform umfasst das Adsorbermaterial Alkalioxide, Erdalkalioxide, Alkalicarbonate oder Erdalkalicarbonate. In einer speziellen Ausführungsform umfasst das Adsorbermaterial Bariumoxid, gegebenenfalls in Kombination mit Platin und Rhodium.

In einer Ausführungsform enthält die Adsorbereinheit ein oder mehrere als Wechselkartusche ausgeführte Filtermodule. Eine solche Wechselkartusche kann ohne großen Aufwand und zerstörungsfrei aus ihrer Position im Luftstrom entfernt und gegen eine andere, gleichartige Kartusche ausgetauscht werden.

In einer weiteren Ausführungsform, bei der ein Adsorbermaterial in der Adsorbereinheit angeordnet ist, z.B. in einem oder mehreren Filtermodulen, ist die Adsorbereinheit so ausgestaltet, dass ihr mit Stickoxiden (NOₓ) beladenes Adsorbermaterial zerstörungsfrei entnommen und durch unbeladenes Adsorbermaterial ersetzt werden kann. Beispielsweise kann die Adsorbereinheit einen wiederverschließbaren Behälter umfassen, aus dem sich das Adsorbermaterial nach Öffnen des Behälters, z.B. durch Aufklappen, Aufschrauben, oder durch Öffnen eines Deckels oder einer Klappe, entnehmen bzw. entfernen lässt. Nach Einfüllen eines unbeladenen Adsorbermaterials kann die Adsorbereinheit wieder verschlossen und erneut mit einem Luftstrom versorgt werden.

In einer Ausführungsform ist die Adsorbereinheit eine stationäre Anlage, die an Orten eingesetzt wird, an denen hohe Stickoxidkonzentrationen in der Luft auftreten, z.B. in Ballungsgebieten, an stark befahrenen Straßen oder in Tunneln. In einer Ausführungsform ist die Adsorbereinheit in einem Tunnel montiert, z.B. an der Tunneldecke. Es können in einem Tunnel auch mehrere Adsorbereinheiten vorhanden sein. In einer anderen Ausführungsform ist die stationäre Adsorbereinheit außerhalb des Tunnels angeordnet und über geeignete Vorrichtungen wird ein Luftstrom aus dem Tunnelinneren abgesaugt, durch die Adsorbereinheit geleitet und anschließend wieder in den Tunnel zurückgeführt. In einer beispielhaften Ausführungsform ist die Adsorbereinheit für einen nominalen Luftstrom von 10.000 bis 30.000 m³/h ausgelegt. Hierfür ist eine Ventilatorleistung im Bereich von 1 bis 10 kW erforderlich, z.B. 4 kW für 20.000 m³/h.

In einer Ausführungsform umfasst die Adsorbereinheit ein oder mehrere als Wechselkartuschen ausgestaltete und mit einem Adsorbermaterial gefüllte Filtermodule. Die Kartuschen können leicht entnommen und gegen Kartuschen mit unbeladenem Adsorbermaterial getauscht werden, wenn die Beladungsgrenze des Adsorbermaterials erreicht ist. In einer beispielhaften Ausführungsform fasst eine Kartusche 300 bis 400 kg Adsorbermaterial. In einer Ausführungsform hat die Kartusche eine Länge von etwa einem Meter, z.B. 80 bis 120cm.

Das erfindungsgemäße System umfasst eine Sammelstelle, an der das mit NOx beladene Material gesammelt und zwischengelagert wird, um größere Mengen des beladenen Materials für den nächsten Schritt zur Verfügung zu haben und dadurch den Verwertungsprozess effizienter zu gestalten.

Das erfindungsgemäße System umfasst ein Desorptionsmodul, das dazu eingerichtet ist, in dem Adsorbermaterial adsorbierte Stickoxide aus diesem zu desorbieren.

In einer Ausführungsform ist das Desorptionsmodul dazu eingerichtet, mit einem Adsorbermaterial gefüllte Filtermodule bzw. Wechselkartuschen zu erhitzen (gegebenenfalls unter vermindertem Druck) oder ihnen heißen Wasserdampf, heißes Gas oder ein flüssiges Lösungsmittel zuzuführen und dadurch Stickoxide aus den Filtermodulen bzw. Wechselkartuschen zu desorbieren.

In einer weiteren Ausführungsform ist das Desorptionsmodul dazu eingerichtet, mit Stickoxiden beladenes Adsorbermaterial zu erhitzen (gegebenenfalls unter vermindertem Druck) oder mit heißem Wasserdampf, heißem Gas oder einem flüssigen Lösungsmittel zu behandeln, und dadurch Stickoxide aus dem Adsorbermaterial zu desorbieren.

Das erfindungsgemäße System umfasst zudem eine Reaktionseinheit, die dafür eingerichtet ist, die desorbierten Stickoxide aus dem Desorptionsmodul zu flüssigen oder festen stickstoffhaltigen Verbindungen umzusetzen. Die Reaktionseinheit ist dafür eingerichtet, einen stickoxidhaltigen Eduktstrom aus dem Desorptionsmodul aufzunehmen und die Stickoxide mit weiteren Reaktanden umzusetzen. In einer Ausführungsform umfasst die Reaktionseinheit einen Reaktor zur Umsetzung von Stickoxiden zu Salpetersäure. In einer weiteren Ausführungsform umfasst die Reaktionseinheit einen Reaktor zur Umsetzung von Salpetersäure zu Nitraten.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand eines Ausführungsbeispiels illustriert und wird unter Bezugnahme auf das Beispiel und die zugehörige Zeichnung weiter beschrieben. Es zeigt.
- Figur 1: eine schematische Darstellung einer Ausführungsform des erfindungsgemäßen Systems zur Verwertung von Stickoxiden;
- Figur 2a: eine Frontansicht einer Ausführungsform einer Adsorbereinheit in schematischer Darstellung;
- Figur 2b: eine Frontansicht einer anderen Ausführungsform einer Adsorbereinheit in schematischer Darstellung;
- Figur 2c: einen Längsschnitt der in Figur 2a) gezeigten Adsorbereinheit in schematischer Darstellung;
- Figur 3: schematische Darstellungen eines Tunnels mit Straßenverkehr ohne (links) und mit (rechts) einer Ausführungsform einer Adsorbereinheit des erfindungsgemäßen Systems.

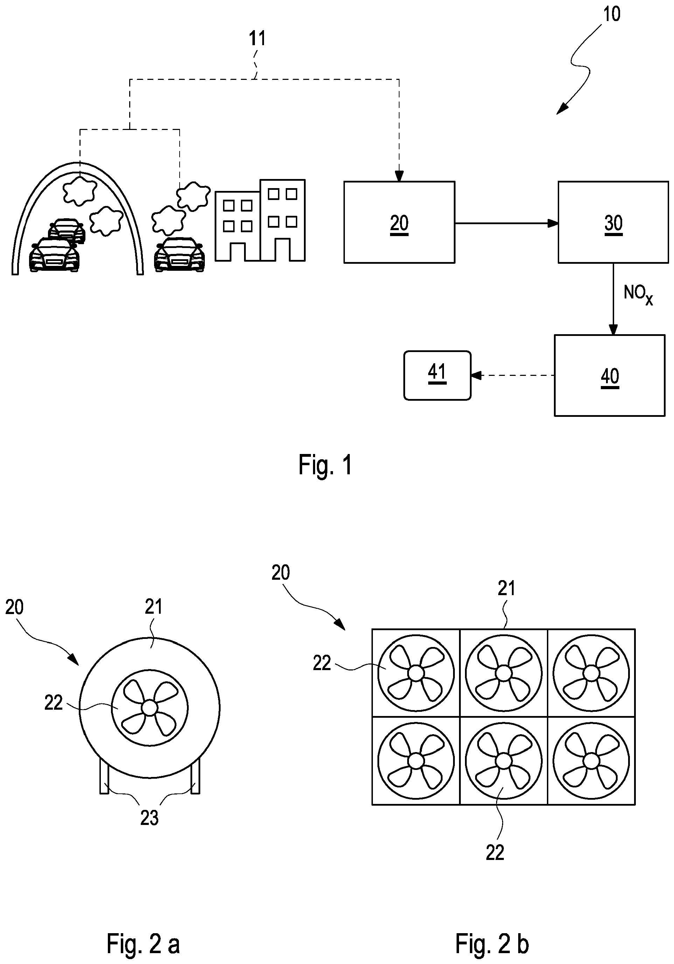

Figur 1 zeigt schematisch eine Ausführungsform des erfindungsgemäßen Systems 10 zur Verwertung von Stickoxiden. Ein Stickoxide enthaltender Luftstrom 11 wird durch eine stationäre Adsorbereinheit 20 geleitet, die zur Adsorption von Stickoxiden (NOₓ) aus dem Luftstrom 11 eingerichtet ist, beispielsweise in einer ein Adsorbermaterial enthaltenden Wechselkartusche. Während des Betriebs der Adsorbereinheit 20 erfolgt eine Adsorption von NOₓ in der Adsorbereinheit 20. Die Adsorbereinheit 20 wird dadurch mit NOₓ beaufschlagt und kann bis zur Aufnahmegrenze der Adsorbereinheit NOₓ aufnehmen.

Ein Austausch des Adsorbermaterials in der Adsorbereinheit 20 erfolgt spätestens nach Erreichen der Aufnahmegrenze, d. h. wenn das Adsorbermaterial vollständig mit NOₓ gesättigt ist. Entweder wird ein Filtermodul der Adsorbereinheit 20 als Ganzes getauscht oder es wird das Adsorbermaterial in der Adsorbereinheit 20 gegen neues, nicht beladenes Material ausgetauscht. Die Filtermodule der Adsorbereinheit 20 sind daher bevorzugt als Wechselkartusche ausgeführt oder erlauben eine Entnahme des beladenen Adsorbermaterials und den Ersatz des beladenen Materials durch unbeladenes Adsorbermaterial ohne viel Montageaufwand und insbesondere, ohne dass die Adsorbereinheit 20 dabei zerstört wird.

Das mit NOₓ beladene Material wird in einer Sammelstelle gesammelt und zwischengelagert, um größere Mengen des beladenen Materials für den nächsten Schritt zur Verfügung zu haben und dadurch den Verwertungsprozess effizienter zu gestalten.

Filtermodule der Adsorbereinheit 20 oder das darin enthaltene beladene Adsorbermaterial werden dann überführt in ein Desorptionsmodul 30. Im Desorptionsmodul 30 werden die adsorbierten Stickoxide desorbiert. In einer Variante wird das mit NOₓ beladene Adsorbermaterial entweder mit Hitze, heißem Dampf, heißem Gas oder einem flüssigen Lösungsmittel (z.B. Wasser) behandelt. Das NOₓ geht in die Dampf- oder Flüssigphase über, das Adsorbermaterial bleibt unverändert. Eventuell muss das Adsorbermaterial vor einer Wiederverwendung getrocknet werden. Es sollte bei der Desorption als auch bei der Trocknung mit moderaten Temperaturen von maximal 200°C gearbeitet werden. Das abgetrennte NOₓ wird einer Reaktionseinheit 40 zur weiteren Umsetzung zugeführt.

In der Reaktionseinheit 40 werden die desorbierten Stickoxide zu flüssigen oder festen stickstoffhaltigen Verbindungen 41 umgesetzt. Beispielsweise kann das NOₓ in die Produktionskette von Salpetersäure, Nitraten oder nichtwässrigen Lösungsmitteln auf NO₂-Basis eingebracht werden.

In einer Variante werden die Stickoxide NOₓ in der Reaktionseinheit 40 zunächst zu Salpetersäure HNO₃ umgesetzt. Die Salpetersäure wird anschließend zu Nitraten umgesetzt, die beispielsweise als Stickstoffdünger Verwendung finden.

Figur 2a zeigt schematisch eine Frontansicht einer Ausführungsform einer Adsorbereinheit 20. Die Adsorbereinheit 20 umfasst ein Gehäuse 21, an dessen Einströmöffnung eine Luftansaugvorrichtung, z.B. ein Gebläse 22 angeordnet ist, die dafür konfiguriert ist, einen Luftstrom durch das Gehäuse 21 zu leiten. Befestigungselemente 23 ermöglichen die stationäre Montage der Adsorbereinheit 20.

Figur 2b zeigt schematisch eine Frontansicht einer anderen Ausführungsform einer Adsorbereinheit 20. Die dargestellte Adsorbereinheit 20 umfasst mehrere Module, die jeweils ein Gebläse 22 aufweisen. In einer Ausführungsform hat jedes Modul ein eigenes Gehäuse 21 und benachbarte Gehäuse 21 sind miteinander durch geeignete Mittel verbunden, z.B. verschraubt oder verschweißt. In einer anderen Ausführungsform sind alle Module in einem gemeinsamen Gehäuse 21 montiert, das eine Vielzahl von Fächern für einzelne Module aufweist.

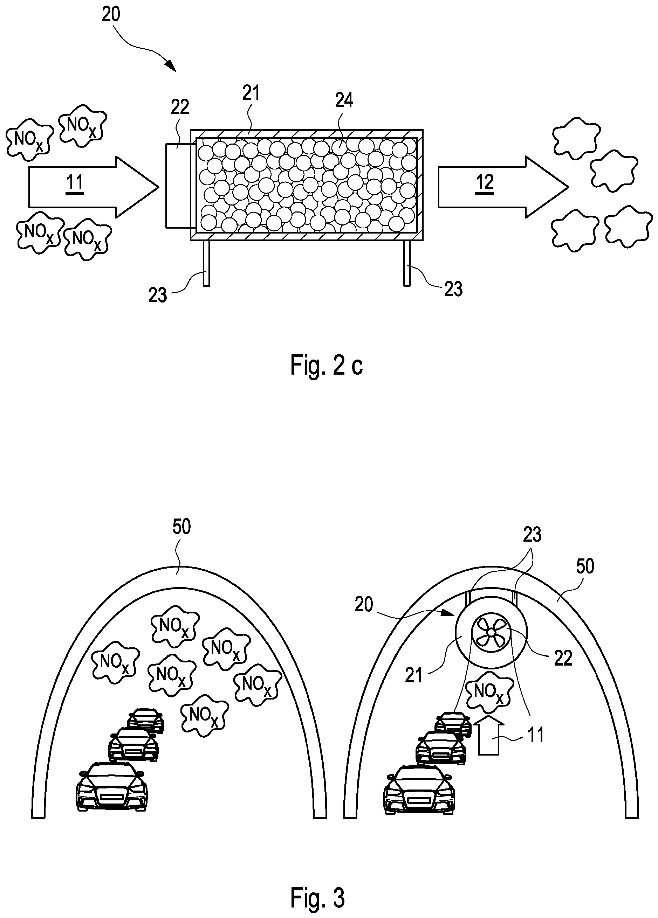

Figur 2c zeigt in schematischer Darstellung einen Längsschnitt der in Figur 2a) gezeigten Adsorbereinheit 20. In dem Gehäuse 21 ist ein granulares Adsorbermaterial 24 angeordnet. Das Gebläse 22 leitet einen Stickoxide enthaltenden Luftstrom 11 durch das Gehäuse 21 mit dem Adsorbermaterial 24. Das Adsorbermaterial 24 adsorbiert Stickoxide aus dem Luftstrom 11 und ein an Stickoxiden abgereicherter Luftstrom 12 verlässt das Gehäuse.

Figur 3 zeigt auf der linken Seite schematisch einen Tunnel 50 mit Straßenverkehr. Die Stickoxidemissionen der Fahrzeuge sind symbolisiert durch NOₓ-Wolken. Auf der rechten Seite ist schematisch ein Tunnel 50 mit einer Ausführungsform einer Adsorbereinheit 20 des erfindungsgemäßen Systems dargestellt. Die Adsorbereinheit 20 ist mit Befestigungselementen 23 an der Tunneldecke montiert. Das Gebläse 22 saugt einen mit Stickoxiden aus den Fahrzeugemissionen beladenen Luftstrom 11 durch die Adsorbereinheit 20.

Der gesetzliche Grenzwert für die Stickoxidkonzentration in Luft liegt aktuell bei 40 µg/m³. In einem Tunnel können bei starkem Verkehr Konzentrationen von 1 mg/m³ (1000 µg/m³) erreicht werden. Bei einem Luftvolumen im Tunnel von beispielsweise 150.000 m³ entspricht 1 ppm NOₓ (1 mg/m³) ca. 150 g NOₓ, die durch die Adsorbereinheit 20 der Luft entzogen werden können. In einer beispielhaften Ausführung hat das Gebläse 22 der Adsorbereinheit 20 eine Ventilatorleistung von 4 kW und die Adsorbereinheit 20 ist für einen nominalen Luftstrom von 20.000 m³/h ausgelegt. Die Adsorbereinheit 20 enthält eine Kartusche mit 400 kg Adsorbermaterial 24. Innerhalb von etwa 8 h wird eine Luftmenge, die dem gesamten Luftvolumen im Tunnel entspricht, durch die Adsorbereinheit 20 geleitet und das im Luftstrom 11 enthaltene Stickoxid wird im Adsorbermaterial 24 adsorbiert. Dadurch lassen sich pro Tag etwa 450-500 g NOₓ gewinnen. Die Adsorptionsgrenze der Kartusche ist nach etwa einem Monat erreicht, dann hat das Adsorbermaterial 24 ca. 15 kg NOₓ aufgenommen. Die Kartusche wird dann ausgetauscht und die adsorbierten Stickoxide werden rückgewonnen.

### Bezuqszeichenliste

- 10: System
- 11: Stickoxidhaltiger Luftstrom
- 12: an Stickoxiden abgereicherter Luftstrom
- 20: Adsorbereinheit
- 21: Gehäuse
- 22: Ansaugvorrichtung/Gebläse
- 23: Befestigungselement
- 24: Adsorbermaterial
- 30: Desorptionsmodul
- 40: Reaktionseinheit
- 41: Reaktionsprodukt (flüssige oder feste stickstoffhaltige Verbindungen)
- 50: Tunnel

## Patentansprüche

1. Verfahren zur Verwertung von in der Umgebungsluft enthaltenen Stickoxiden, umfassend die Adsorption von Stickoxiden (NOₓ) aus der Umgebungsluft in einer stationären Adsorbereinheit (20), welche ein Adsorbermaterial (24) enthält, Entfernen des mit Stickoxiden (NOₓ) beladenen Adsorbermaterials (24) aus der Adsorbereinheit (20), Sammeln und Zwischenlagern des mit Stickoxiden (NOₓ) beladenen Adsorbermaterials (24) in einer Sammelstelle, Überführen des mit Stickoxiden (NOₓ) beladenen Adsorbermaterials (24) in ein Desorptionsmodul (30), Desorption von adsorbierten Stickoxiden (NOₓ) aus dem Adsorbermaterial (24), und Umsetzung der Stickoxide (NOₓ) zu flüssigen oder festen stickstoffhaltigen Verbindungen (41).

2. Verfahren nach Anspruch 1, worin das Adsorbermaterial (24) mindestens einen Zeolithen umfasst.

3. Verfahren nach Anspruch 1 oder 2, bei dem die flüssigen oder festen stickstoffhaltigen Verbindungen (41) Nitrate umfassen.

4. Verfahren nach Anspruch 3, worin die Stickoxide (NOₓ) in der Reaktionseinheit (40) zunächst zu Salpetersäure umgesetzt werden und die Salpetersäure anschließend zu Nitraten umgesetzt wird.

5. System (10) zur Verwertung von Stickoxiden, umfassend eine stationäre Adsorbereinheit (20), die zur Adsorption von Stickoxiden (NOₓ) aus der Umgebungsluft eingerichtet ist, worin die stationäre Adsorbereinheit (20) ein Gehäuse (21) mit wenigstens einer Ein- und Ausströmöffnung in der Gehäusewandung, ein Filtermodul im Inneren des Gehäuses (21), welches strömungstechnisch mit der Ein- und Austrittsöffnung verbunden ist, so dass ein Luftkanal gebildet ist, und eine Luftansaug-Vorrichtung (22), um Luft aus der Umgebung anzusaugen und durch das Filtermodul zu führen, aufweist, und worin die Adsorbereinheit (20) ein Adsorbermaterial (24) enthält, welches dazu eingerichtet ist, Stickoxide (NOₓ) adsorptiv zu binden, und die Adsorbereinheit (20) so ausgestaltet ist, dass ihr zerstörungsfrei mit Stickoxiden (NOₓ) beladenes Adsorbermaterial (24) entnommen werden und durch unbeladenes Adsorbermaterial (24) ersetzt werden kann, eine Sammelstelle zur Zwischenlagerung von mit Stickoxiden (NOₓ) beladenem Adsorbermaterial (24), ein Desorptionsmodul (30), das dazu eingerichtet ist, mit Stickoxiden (NOₓ) beladenes Adsorbermaterial (24), gegebenenfalls unter vermindertem Druck, zu erhitzen oder mit heißen Wasserdampf, heißem Gas oder einem flüssigen Lösungsmittel zu behandeln, und dadurch Stickoxide (NOₓ) aus dem Adsorbermaterial (24) zu desorbieren, und eine Reaktionseinheit (40), die dazu eingerichtet ist, die desorbierten Stickoxide (NOₓ) zu flüssigen oder festen stickstoffhaltigen Verbindungen (41) umzusetzen.

6. System (10) nach Anspruch 5, worin das Adsorbermaterial (24) mindestens einen Zeolithen umfasst.

7. System (10) nach Anspruch 5 oder 6, worin die Adsorbereinheit (20) mindestens eine Wechselkartusche mit Adsorbermaterial (24) umfasst.

8. System (10) nach Anspruch 7, worin die Wechselkartusche 300 bis 400 kg Adsorbermaterial (24) umfasst.

9. System nach einem der Ansprüche 5 bis 8, worin die Adsorbereinheit (20) für einen nominalen Luftstrom von 10.000 bis 30.000 m³/h ausgelegt ist.

## Claims

1. Method for utilising nitrogen oxides contained in the ambient air, comprising adsorbing nitrogen oxides (NOₓ) from the ambient air in a stationary adsorber unit (20) which contains an adsorber material (24), removing the adsorber material (24) loaded with nitrogen oxides (NOₓ) from the adsorber unit (20), collecting and temporarily storing the adsorber material (24) loaded with nitrogen oxides (NOₓ) in a collection point, transferring the adsorber material (24) loaded with nitrogen oxides (NOₓ) into a desorption module (30), desorbing adsorbed nitrogen oxides (NOₓ) from the adsorber material (24), and converting the nitrogen oxides (NOₓ) into liquid or solid nitrogen-containing compounds (41).

2. Method according to claim 1, wherein the adsorbent material (24) comprises at least one zeolite.

3. Method according to claim 1 or 2, in which the liquid or solid nitrogen-containing compounds (41) comprise nitrates.

4. Method according to claim 3, wherein the nitrogen oxides (NOₓ) are first converted into nitric acid in the reaction unit (40) and the nitric acids are subsequently converted into nitrates.

5. System (10) for utilising nitrogen oxides, comprising a stationary adsorber unit (20) configured to adsorb nitrogen oxides (NOₓ) from the ambient air, wherein the stationary adsorber unit (20) has a housing (21) with at least one inflow and outflow opening in the housing wall, a filter module in the interior of the housing (21) which is fluidically connected to the inflow and outflow opening such that an air duct is formed, and an air intake device (22) for drawing in air from the environment and passing it through the filter module, and wherein the adsorber unit (20) contains an adsorber material (24) configured to adsorptively bind nitrogen oxides (NOₓ), and the adsorber unit (20) is designed such that adsorber material (24) loaded with nitrogen oxides (NOₓ) can be removed therefrom non-destructively and replaced with unloaded adsorber material (24), a collection point for temporary storage of adsorber material (24) loaded with nitrogen oxides (NOₓ), a desorption module (30) configured to heat adsorber material (24) loaded with nitrogen oxides (NOₓ), optionally at reduced pressure, or to treat same with hot water vapour, hot gas or a liquid solvent, and thereby to desorb nitrogen oxides (NOₓ) from the adsorber material (24), and a reaction unit (40) configured to convert the desorbed nitrogen oxides (NOₓ) into liquid or solid nitrogen-containing compounds (41).

6. System (10) according to claim 5, wherein the adsorber material (24) comprises at least one zeolite.

7. System (10) according to claim 5 or 6, wherein the adsorber unit (20) comprises at least one exchangeable cartridge with adsorber material (24).

8. System (10) according to claim 7, wherein the exchangeable cartridge comprises 300 to 400 kg of adsorber material (24).

9. System (10) according to any of claims 5 to 8, wherein the adsorber unit (20) is configured for a nominal air flow of 10,000 to 30,000 m³/h.

## Revendications

1. Procédé de recyclage d'oxydes d'azote contenus dans l'air ambiant, comprenant l'adsorption d'oxydes d'azote (NOₓ) de l'air ambiant dans une unité d'adsorption stationnaire (20), laquelle contient un matériau adsorbant (24), l'élimination du matériau adsorbant (24) chargé d'oxydes d'azote (NOₓ) de l'unité d'adsorption (20), la collecte et le stockage temporaire du matériau adsorbant (24) chargé d'oxydes d'azote (NOₓ) dans un point de collecte, le transfert du matériau adsorbant (24) chargé d'oxydes d'azote (NOₓ) dans un module de désorption (30), la désorption d'oxydes d'azote (NOₓ) adsorbés du matériau adsorbant (24), et la conversion des oxydes d'azote (NOₓ) en composés azotés liquides ou solides (41).

2. Procédé selon la revendication 1, dans lequel le matériau adsorbant (24) comprend au moins une zéolite.

3. Procédé selon la revendication 1 ou 2, dans lequel les composés azotés liquides ou solides (41) comprennent des nitrates.

4. Procédé selon la revendication 3, dans lequel les oxydes d'azote (NOₓ) dans l'unité de réaction (40) sont d'abord convertis en acide nitrique et l'acide nitrique est ensuite converti en nitrates.

5. Système (10) pour recycler des oxydes d'azote, comprenant une unité d'adsorption stationnaire (20), qui est configurée pour adsorber des oxydes d'azote (NOₓ) de l'air ambiant, dans lequel l'unité d'adsorption stationnaire (20) présente un boîtier (21) avec au moins une ouverture d'entrée et de sortie dans la paroi de boîtier, un module de filtre à l'intérieur du boîtier (21), lequel est connecté fluidiquement à l'ouverture d'entrée et de sortie de sorte qu'un conduit d'air est formé, et un dispositif d'aspiration d'air (22) pour aspirer l'air ambiant et le guider à travers le module de filtre, et dans lequel l'unité d'adsorption (20) contient un matériau adsorbant (24), qui est configuré pour lier des oxydes d'azote (NOₓ) par adsorption, et l'unité d'adsorption (20) est conçue de sorte que son matériau adsorbant (24) chargé d'oxydes d'azote (NOₓ) peut être prélevé de manière non destructive et remplacé par du matériau adsorbant (24) non-chargé, un point de collecte pour le stockage intermédiaire de matériau adsorbant (24) chargé d'oxydes d'azote (NOₓ), un module de désorption (30) qui est configuré pour chauffer un matériau adsorbant (24) chargé d'oxydes d'azote (NOₓ), éventuellement sous pression réduite, ou pour le traiter avec de la vapeur d'eau chaude, un gaz chaud ou un solvant liquide, et ainsi désorber des oxydes d'azote (NOₓ) du matériau adsorbant (24), et une unité de réaction (40) qui est configurée pour convertir les oxydes d'azote (NOₓ) désorbés en composés azotés liquides ou solides (41).

6. Système (10) selon la revendication 5, dans lequel le matériau adsorbant (24) comprend au moins une zéolite.

7. Système (10) selon la revendication 5 ou 6, dans lequel l'unité d'adsorption (20) comprend au moins une cartouche échangeable avec du matériau adsorbant (24).

8. Système (10) selon la revendication 7, dans lequel la cartouche échangeable comprend 300 à 400 kg de matériau adsorbant (24).

9. Système selon l'une quelconque des revendications 5 à 8, dans lequel l'unité d'adsorption (20) est conçue pour un débit d'air nominal de 10 000 à 30 000 m³/h.
